(19) Europäisches Patentamt
European Patent Office
Office européen des brevets

(11) Veröffentlichungsnummer: **0 384 896 A1**

# (12) EUROPÄISCHE PATENTANMELDUNG

(21) Anmeldenummer: **90810111.6**

(51) Int. Cl.[5]: **C08L 63/00**

(22) Anmeldetag: **15.02.90**

(30) Priorität: **24.02.89 CH 674/89**

(43) Veröffentlichungstag der Anmeldung:
**29.08.90 Patentblatt 90/35**

(84) Benannte Vertragsstaaten:
**AT CH DE FR GB IT LI NL SE**

(71) Anmelder: **CIBA-GEIGY AG**
**Klybeckstrasse 141**
**CH-4002 Basel(CH)**

(72) Erfinder: **Mülhaupt, Rolf, Prof.Dr.**
**Rötebuckweg 30**
**D-7800 Freiburg i.Br.(DE)**
Erfinder: **Rüfenacht, Werner**
**Route du Confin 16**
**CH-1723 Marly(CH)**

## (54) Zähe Epoxidgiessharze.

(57) Beschrieben werden härtbare Zusammensetzungen enthaltend

A) ein Epoxidharz mit durchschnittlich mehr als einer Epoxidgruppe pro Molekül,

B) einen Carbonsäureanhydridhärter für Komponente A), und

C) etwa 5 bis 40 Gew.%, bezogen auf die Menge der Komponenten A), B) und C), einer flüssigen Mischung aus C1) einem Polyalkylenglykol auf Basis von Polypropylenglykol oder Polybutylenglykol mit zwei bis etwa sechs Hydroxyl-, Carboxyl-, Carbonsäureanhydrid- oder Glycidylendgruppen und aus C2) einem elastomeren Copolymeren auf Basis von Butadien, einem polaren, ethylenisch ungesättigten Comonomeren und gegebenenfalls weiteren ethylenisch ungesättigten Comonomeren mit Carbonsäure-, Hydroxyl-, Mercapto- oder Glycidyletherendgruppen. Komponenten C1) und C2) können auch in einem segmentierten Copolymeren gemeinsam auftreten.

EP 0 384 896 A1

## Zähe Epoxidgiessharze

Die vorliegende Erfindung betrifft neue giessfähige Epoxidharzzusammensetzungen und die daraus erhältlichen gehärteten Produkte.

Zusätze zum Modifizieren von Epoxidharzen sind bereits bekannt. So werden beispielsweise in der DE-A-2,631,108 bei Raumtemperatur härtbare und giessbare Polymermassen enthaltend ein nicht cycloaliphatisches Epoxidharz und ein ausgewähltes flüssiges amin-terminiertes Polymerisat, wie einen Butadien-Acrylnitril Kautschuk, beschrieben. Diese Massen sind gegen Hydrolyse beständig und erfordern im allgemeinen kein zusätzliches Vernetzungsmittel.

In der DE-A-2,706,693 werden Stoffgemische enthaltend ein cycloaliphatisches Epoxidharz, ein ausgewähltes flüssiges amin-terminiertes Polymerisat, wie einen Butadien-Acrylnitril Kautschuk, und ein Anhydrid beschrieben. Diese Gemische sind zu einem thermoplastischen, elastomeren Zwischenzustand härtbar und können anschliessend über einen geschmolzenen Zustand in ein hitzegehärtetes, elastomeres klebfreies Endprodukt übergeführt werden.

In der DE-A-2,447,036 wird die Herstellung von gummielastischen Formteilen beschrieben. Das dort offenbarte Verfahren ist gekennzeichnet durch das Giessen und Härten von Zusammensetzungen enthaltend einen Polyether mit einem mittleren Molekulargewicht von 1'000 und 20'000, ein 1,2-Dicarbonsäureanhydrid, ein Bisepoxid und gegebenenfalls einen polaren hochmolekularen Kautschuk.

In der DE-A-3,740,183 wird vorgeschlagen, die Einarbeitung von synthetischem Kautschuk in Epoxidharze durch Verwendung eines nichtionischen oder anionischen grenzflächenaktiven Mittels zu verbessern. Damit lässt sich der Kautschuk gleichmässig und beständig im Epoxidharz dispergieren, was zu einer verbesserten Verarbeitbarkeit führt und es lassen sich Produkte mit einer geringen Schwankung der Schälfestigkeit erhalten.

Gemäss der EP-A-169,066 lassen sich Kombinationen von Gylcidylethern und amino-terminierten aliphatischen Polyethern durch Zugabe einer Kombination eines polymeren Zähigkeitsvermittlers und eines Härtungskatalysators modifizieren, so dass rasch härtbare Zusammensetzungen erhalten werden, die zu gehärteten Produkten mit hoher Zugscherfestigkeit und hoher Schälfestigkeit umgesetzt werden können.

Es hat sich gezeigt, dass die Verwendung von Polyethern in Epoxidharzen häufig zu verringerten Festigkeiten, wie Zug-, Zugscher- und Biegefestigkeit, bei den gehärteten Produkten führt. Ferner werden in der Regel der Elastizitätsmodul und die Glasübergangstemperatur der gehärteten Produkte herabgesetzt. Durch Zugabe von Butadien-Elastomeren können Festigkeitsverluste in der Regel vermieden werden. Allerdings führen solche Zusätze häufig zu einer unerwünschten Erhöhung der Viskosität der härtbaren Mischung und die Schlagzähigkeit und Bruchzähigkeit der gehärteten Produkte lassen in der Regel zu wünschen übrig.

Durch die Erfindung werden giessbare und heisshärtbare Epoxidzusammensetzungen mit erhöhter Zähigkeit bereitgestellt, die zu gehärteten Produkten mit hoher Festigkeit und hohen Glasübergangstemperaturen verarbeitet werden können.Die erfindungsgemässen Zusammensetzungen zeichnen sich insbesondere durch überraschend hohe Schlag- und Bruchzähigkeiten und durch hohe Bruchdehnungen aus.

Die Erfindung betrifft härtbare Zusammensetzungen enthaltend

A) ein Epoxidharz mit durchschnittlich mehr als einer Epoxidgruppe pro Molekül,

B) einen Carbonsäureanhydridhärter für Komponente A), und

C) etwa 5 bis 40 Gew.%, bezogen auf die Menge der Komponenten A), B) und C), einer flüssigen Mischung aus C1) einem Polyalkylenglykol auf Basis von Polypropylenglykol oder Polybutylenglykol mit zwei bis etwa sechs Hydroxyl-, Carboxyl-, Carbonsäureanhydrid- oder Glycidylendgruppen und aus C2) einem elastomeren Copolymeren auf Basis von Butadien, einem polaren, ethylenisch ungesättigten Comonomeren und gegebenenfalls weiteren ethylenisch ungesättigten Comonomeren mit Carbonsäure-, Hydroxyl-, Mercapto- oder Glycidyletherendgruppen.

Polyalkylenglycol und elastomeres Copolymeres können auch in einem segmentierten Copolymeren gemeinsam auftreten. Diese Ausführungsform ist bevorzugt, da sich damit in der Regel noch höhere Zähigkeiten des gehärteten Produktes ohne signifikante Festigkeitsverluste erzielen lassen.

Die Erfindung betrifft daher auch härtbare Zusammensetzungen enthaltend

A) ein Epoxidharz mit durchschnittlich mehr als einer Epoxidgruppe pro Molekül,

B) einen Carbonsäureanhydridhärter für Komponente A), und

C) etwa 5 bis 40 Gew.%, bezogen auf die Menge der Komponenten A), B) und C), eines flüssigen segmentierten Copolymeren mit Hydroxyl-, Carboxyl-, Carbonsäureanhydrid-oder Glycidylendgruppen enthaltend mindestens einen Block, der sich von einem Polyalkylenglykol auf Basis von Polypropylenglykol oder Polybutylenglykol ableitet und mindestens einen Block, der sich von einem elastomeren Copolymeren

auf Basis von Butadien, einem polaren, ethylenisch ungesättigten Comonomeren und gegebenenfalls weiteren ethylenisch ungesättigten Comonomeren ableitet, wobei besagte Blöcke über gleiche oder verschiedene funktionelle Gruppen -CO-X- oder -Y-$CH_2$-CH(OH)-$CH_2$-O-verbunden sind, worin X -O-, -S- oder -$NR_1$- bedeutet, Y -O-, -S-, -$NR_1$- oder -CO-O- ist und $R_1$ Wasserstoff, Alkyl, Cycloalkyl, Aryl oder Aralkyl ist.

$R_1$ als Alkyl kann geradkettig oder verzweigt sein. Bevorzugt wird geradkettiges $C_1$-$C_6$Alkyl, insbesondere Methyl.

$R_1$ als Cycloalkyl besitzt vorzugsweise 5 oder 6 Ringkohlenstoffatome. Vorzugsweise handelt es sich dabei um Cyclohexyl.

$R_1$ als Aryl ist vorzugsweise ein ein- oder zweikerniger carbocyclisch-aromatischer Rest, insbesondere Phenyl.

$R_1$ als Aralkyl ist vorzugsweise ein Rest mit einem einkernigen carbocyclischen-aromatischen Rest, insbesondere Benzyl.

Als Komponente A) der erfindungsgemässen Zusammensetzungen eignen sich praktisch alle Epoxidharze mit durchschnittlich wenigstens zwei 1,2-Epoxidgruppen pro Molekül. Beispiele dafür sind:

I) Polyglycidyl- und Poly-($\beta$-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit $\beta$-Methylepichlorhydrin in Gegenwart von Basen erhalten werden können.

Beispiele für Verbindungen mit mindestens zwei Carboxylgruppen im Molekül sind gesättigte aliphatische Dicarbonsäuren, wie Oxalsäure, Malonsäure, Bernsteinsäure, $\alpha$-Methylbernsteinsäure, Glutarsäure, Adipinsäure, Pimelinsäure, Azelainsäure, Sebazinsäure oder dimerisierte Linolsäure; oder ungesättigte aliphatische Dicarbonsäuren, wie Maleinsäure, Mesaconsäure, Citraconsäure, Glutaconsäure oder Itaconsäure; oder cycloaliphatische Dicarbonsäuren, wie Hexahydrophthal-, Hexahydroisophthal- oder Hexahydroterephthalsäure, oder Tetrahydrophthal-, Tetrahydroisophthal- oder Tetrahydroterephthalsäure, oder 4- Methyltetrahydrophthalsäure, 4-Methylhexahydrophthalsäure oder Endomethylentetrahydrophthalsäure; oder aromatische Dicarbonsäuren, wie Phthal-, Isophthal- oder Terephthalsäure; oder Copolymere von (Meth)acrylsäure mit copolymerisierbaren Vinylmonomeren, wie beispielsweise die 1 : 1 Copolymeren von Methacyrylsäure mit Styrol oder mit Methacrylsäuremethylester. Beispiele für Tri- und höhere Carbonsäuren sind insbesondere aromatische Tri- oder Tetracarbonsäuren, wie Trimellitsäure, Trimesinsäure, Pyromellitsäure oder Benzophenontetracarbonsäure, sowie dimerisierte oder trimerisierte Fettsäuren, wie sie beispielsweise under der Bezeichnung Pripol® im Handel sind.

II) Polyglycidyl- und Poly-($\beta$-methylglycidyl)-ether, die beispielsweise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit $\beta$-Methylepichlorhydrin unter alkalischen Bedingungen oder in Anwesenheit eines sauren Katalysators und anschliessende Alkalibehandlung erhalten werden können. Beispiele für Verbindungen mit mindestens zwei alkoholischen Hydroxylgruppen und/oder phenolischen Hydroxylgruppen im Molekül sind aliphatische Alkohole, wie Ethylenglykol, Diethylenglykol und höhere Poly-(oxyethylen)-glykole, Propan-1,2-diol, Propan-1,3-diol oder höhere Poly-(oxypropylen)-glykole, Butan-1,4-diol oder höhere Poly-(oxybutylen)-glykole, Pentan-1,5-diol, Neopentylglykol (2,2- Dimethylpropandiol), Hexan-1,6-diol, Octan-1,8-diol, Decan-1,10-diol oder Dodecan-1,12-diol; Hexan-2,4,6-triol, Glycerin, 1,1,1- Trimethylolethan, 1,1,1-Trimethylolpropan, Pentaerythrit, Sorbit oder Polyepichlorhydrine; oder cycloaliphatische Alkohole, wie 1,3- oder 1,4-Dihydroxycyclohexan, 1,4-Cyclohexandimethanol, Bis-(4-hydroxycyclohexyl)-methan, 2,2- Bis-(4-hydroxycyclohexyl)-propan oder 1,1-Bis-(hydroxy-methyl)-cyclohex-3-en; oder Alkohole enthaltend aromatische Gruppen, wie N,N-Bis-(2-hydroxyethyl)-anilin oder p,p′-Bis-(2-hydroxyethylamino)-diphenylmethan; oder ein- oder mehrkernige Polyphenole, wie Resorcin, Hydrochinon, Bis-(4-hydroxyphenyl)-methan, 2,2,-Bis-(4-hydroxyphenyl)-propan, bromiertes 2,2,-Bis-(4-hydroxyphenyl)-propan, Bis-(4-hydroxyphenyl)-ether, Bis-(4-hydroxyphenyl)-sulfon, 1,1,2,2-Tetrakis-(4-hydroxyphenyl)-ethan oder Novolake, die durch Kondensation von Aldehyden, wie Formaldehyd, Acetaldehyd, Chloral oder Furfuraldehyd mit gegebenenfalls alkyl- oder halogen-substituierten Phenolen, wie Phenol, den oben beschriebenen Bisphenolen, 2- oder 4-Methylphenol, 4-tert.Butylphenol, p-Nonylphenol oder 4- Chlorphenol erhältlich sind.

III) Poly-(N-glycidyl)-verbindungen, die beispielsweise durch Dehydrochlorierung von Reaktionsprodukten von Epichlorhydrin mit Aminen, die mindestens zwei Aminowasserstoffatome enthalten, hergestellt werden können.

Beispiele für Amine, die solchen Epoxidharzen zugrunde liegen, sind aliphatische Amine, wie Hexamethylendiamin oder n-Butylamin; cycloaliphatische Amine, wie 1,4-Diaminocyclohexan, Bis-aminomethylen-1,4-cyclohexan; aromatische Amine, wie Anilin, p-Toluidin, Bis-(4-aminophenyl)-methan, Bis-(4-aminophenyl)-ether, Bis-(4-aminophenyl)-sulfon, 4,4′-Diaminobiphenyl oder 3,3′-Diaminobiphenyl; oder araliphatische Amine, wie m-Xylylendiamin.
Zu den Poly-(N-glycidyl)-verbindungen zählen aber auch Triglycidylisocyanurat, N,N′-Diglycidylderivate von Cycloalkylenharnstoffen, wie von Ethylenharnstoff oder von 1,3-Propylenharnstoff, und N,N′-Diglycidylderivate von Hydantoinen, wie von 5,5-Dimethylhydantoin.
IV) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.
V) Cycloaliphatische Epoxidharze oder Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxicyclopentyloxi)-ethan, 2,3-Epoxicyclopentylglycidylether, Cyclohexan-1,2-dicarbonsäure Diglycidylester, 3,4-Epoxicyclohexylglycidylether, Bis-(2,3-epoxicyclopentyl)-ether, Bis-(3,4-epoxicyclohexyl)-ether, 5(6)-Glycidyl-2-(1,2-epoxiethyl)-bicyclo[2.2.1]heptan, Dicyclopentadiendioxid, Cyclohexa-1,3-diendioxid, 3,4-Epoxi-6-methylcyclohexylmethyl-3′,4′-epoxi-6′-methylcyclohexancarboxylat oder 3,4-Epoxicyclohexylmethyl-3′,4′-epoxicyclohexancarboxylat.
Es lassen sich aber auch Epoxidharze verwenden, bei denen die 1,2-Epoxidgruppen an unterschiedliche Heteroatome bzw. funktionelle Gruppen gebunden sind; zu solchen Verbindungen zählen beispielsweise das N,N,O-Triglycidylderivat des 4-Aminophenols, das N,N,O-Triglycidylderivat des 3-Aminophenols, der Glycidyletherglycidylester der Salicylsäure, N-Glycidyl-N′-(2-glycidyloxipropyl)-5,5-dimethylhydantoin oder 2-Glycidyloxy-1,3-bis-(5,5-dimethyl-1-glycidylhydantoin-3-yl)-propan.

Bevorzugte Komponenten A) und cycloaliphatische Epoxidharze, wie z.B. die weiter oben aufgezählten Verbindungen, und Polyglycidylether, insbesondere Diglycidylether auf Bisphenol Basis, wie auf Basis von Bisphenol F oder insbesondere auf Basis von Bisphenol A.

Ganz besonders bevorzugte Komponenten A) sind flüssige Diglycidylether auf Basis von Bisphenol A.

Als Komponente B) der erfindungsgemässen Zusammensetzungen eignen sich im allgemeinen alle Anhydridhärter für Epoxidharze. Dazu zählen Anhydride von aliphatischen, cycloaliphatischen, aromatischen oder araliphatischen Polycarbonsäuren, wie beispielsweise Anhydride von den weiter oben als Bildungskomponenten für Polyglycidylester aufgezählten Polycarbonsäuren.

Bevorzugte Komponenten B) sind Anhydride von aliphatischen, cycloaliphatischen oder aromatischen Dicarbonsäuren.

Ganz besonders bevorzugt sind Anhydride von Dicarbonsäuren oder Gemische dieser Anhydride, die bei Temperaturen unterhalb von 40° C flüssig sind. Solche Anhydridhärter sind dem Fachmann auf dem Gebiet der Epoxidhärtung an sich bekannt und beispielsweise im "Epoxy Handbook" von Lee und Neville (Mc Graw Hill, 1967) beschrieben.

Spezifische Beispiele für bevorzugte Anhydridhärter B) sind Maleinsäureanhydrid, Bernsteinsäureanhydrid, Dodecylbernsteinsäureanhydrid, Tetrahydrophthalsäureanhydrid, Hexahydrophthalsäureanhydrid, Hexachlorendomethylentetrahydrophthalsäureanhydrid, Phthalsäureanhydrid, Pyromellitsäuredianhydrid, Benzophenon-3,3′,4,4′-tetracarbonsäuredianhydrid, Bicyclo[2.2.1]hept-5-en-2,3-dicarbonsäureanhydrid (Nadic-Anhydrid) oder Methyl-bicyclo[2.2.1]hept-5-en-2,3-dicarbonsäureanhydrid (Methylnadic-Anhydrid).

Komponente C) der erfindungsgemässen Zusammensetzungen ist entweder eine Kombination der oben definierten Komponenten C1) und C2) oder ein segmentiertes Copolymeres enthaltend Blöcke auf Basis dieser Komponenten C1) und C2).

Komponente C1) ist ein ausgewähltes Polyalkylenglykol auf Basis von Polypropylenglykol oder Polybutylenglykol mit zwei bis etwa sechs Hydroxyl-, Carboxyl-, Carbonsäureanhydrid- oder Glycidylendgruppen. Diese Polymeren besitzen im allgemeinen ein durchschnittliches Molekulargewicht (Zahlenmittel) von etwa 500 bis 10'000, insbesondere zwischen 1'000 und 5'000.

Die Polyalkylenglykolsegmente besitzen in der Regel eine Mindestlänge von etwa fünf wiederkehrenden Struktureinheiten, um der erfindungsgemässen Zusammensetzung eine ausreichende Flexibilität zu verleihen. Es können auch Mischungen verschiedener Polypropylenglykole oder Polybutylenglykole innerhalb der erfindungsgemässen Zusammensetzungen oder innerhalb eines segmentierten Copolymeren C) vorliegen; ferner können Komponenten C1) oder Copolyethersegmente aus Polypropylenglykol- und Polybutylenglykoleinheiten verwendet werden. Bei dieser Ausführungsform können auch bis zu 30 Gew.% an Ethylenglykoleinheiten in den Copolyetherrest einkondensiert sein.

Hydroxyl-terminierte Polyalkylenglykole lassen sich beispielsweise durch anionische Polymerisation, Copolymerisation oder Blockcopolymerisation von Propylenoxid oder Butylenoxid gegebenenfalls in Kombination mit Ethylenoxid mit di- oder polyfunktionellen Alkoholen, wie 1,2-Ethandiol, 1,4-Butandiol, 1,1,1-Trimethylolethan, 1,1,1-Trimethylolpropan, 1,2,6-Hexantriol, Glycerin, Pentaerythrit oder Sorbit, oder mit di- oder polyfunktionellen Phenolen, wie Bisphenol A oder Novolaken, oder mit Aminen, wie Methylamin, Ethylendiamin oder 1,6-Hexamethylendiamin, als Starterkomponenten oder durch kationische Polymerisation oder Copolymerisation cyclischer Ether, wie Tetrahydrofuran oder Propylenoxid gegebenenfalls zusammen mit Ethylenoxid mit sauren Katalysatoren, wie $BF_3$-Etherat, oder durch Polykondensation von unter Wasserabspaltung polykondensierbaren Glykolen, wie 1,3-Propandiol oder 1,4-Butandiol in Gegenwart saurer Veretherungskatalysatoren, wie p-Toluolsulfonsäure, erhalten. Ferner kann man auch Oxalkylierungsprodukte von Phosphorsäure oder phosphoriger Säure mit Tetrahydrofuran oder Propylenoxid gegebenenfalls zusammen mit Ethylenoxid verwenden. Polypropylenoxidoligomere können mit Ethylenoxid terminiert sein. Weitere hydroxyl-terminierte Polyalkylenglykole lassen sich z.B. durch Verkappen von hydroxyl-oder amino-terminierten Polypropylen- oder Polybutylenglykolen mit aromatischen Hydroxycarbonsäuren, wie z.B. mit Hydroxybenzoesäure, erhalten.

Carboxyl- oder carbonsäureanhydrid-terminierte Komponenten C1) lassen sich beispielsweise durch Verkappen von hydroxyl-terminierten Polypropylen- oder Polybutylenglykolen mit Polycarbonsäuren, deren Anhydriden oder anderen esterbildenden Derivaten erhalten. Beispiele für mögliche Verkappungskomponenten sind die weiter oben als Bildungskomponenten für Polyglycidylester aufgezählten Polycarbonsäuren.

Glycidyl-terminierte Komponenten C1) lassen sich beispielsweise durch Umsetzung von hydroxyl-terminierten Polypropylen- oder Polybutylenglykolen mit Epichlorhydrin oder mit β-Methylepichlorhydrin in der weiter oben bei der Herstellung von Glycidylethern beschriebenen Weise herstellen. Ausserdem können mit aromatischen Hydroxycarbonsäuren terminierte Polypropylen- oder Polybutylenglykole in der oben beschriebenen Weise glycidylisiert werden.

Bevorzugte Komponenten C1) sind drei- und insbesondere zweiwertige carboxyl-, carbonsäureanhydrid-, glycidyl- und insbesondere hydroxyl-terminierte Polypropylen-oder Polybutylenglykole. Die durchschnittlichen Molekulargewichte (Zahlenmittel) dieser bevorzugten Komponenten C1) liegen zwischen 500 und 5'000, insbesondere zwischen 1'000 und 2'500.

Ganz besonders bevorzugte Komponenten C1) sind Verbindungen der Formeln I bis V

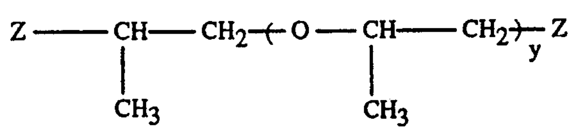 (I),

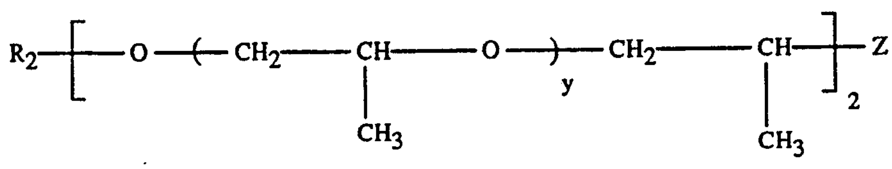 (II),

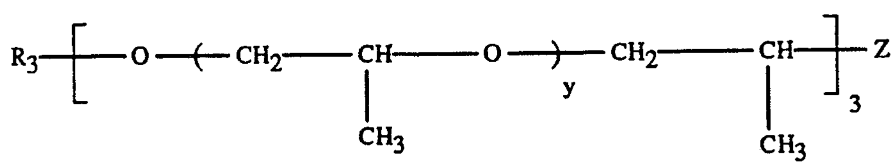 (III),

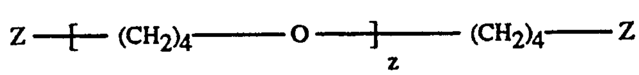 (IV),

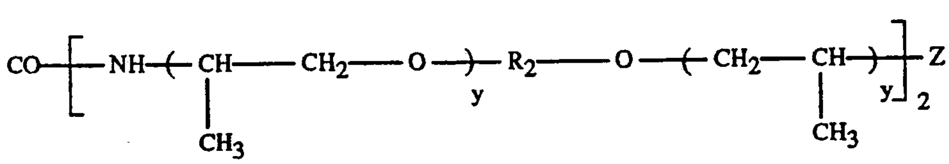 (V),

worin y 5 bis 90, insbesondere 10 bis 90, bedeutet, z 10 bis 40 ist, $R_2$ ein Rest eines aliphatischen Diols oder eines Bisphenols nach dem Entfernen der beiden OH-Gruppen ist, $R_3$ einen Rest eines aliphatischen Triols oder eines Trisphenols nach dem Entfernen der drei OH-Gruppen bedeutet und Z ein Rest ist, der ausgewählt wird aus der Gruppe be

stehend aus 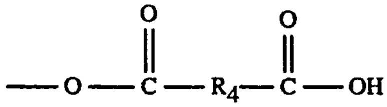 , 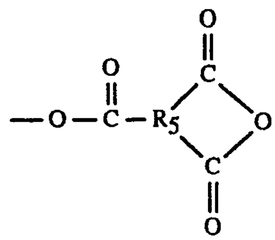 ,

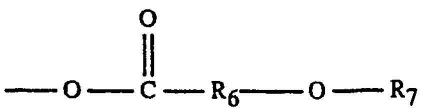 , 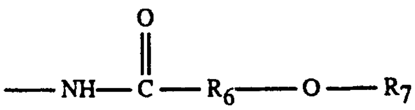 ,

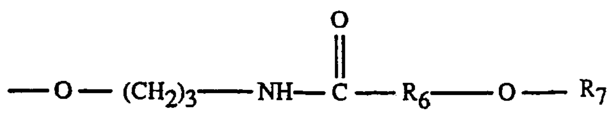 und $-O-R_7$, worin $R_4$ der Rest einer aliphatischen, cycloaliphatischen oder aromatischen Dicarbonsäure nach dem Entfernen der beiden Carboxylgruppen ist, $R_5$ der Rest einer aromatischen Tricarbonsäure nach dem Entfernen der drei Carboxylgruppen ist, $R_6$ der Rest einer aromatischen Hydroxycarbonsäure nach dem Entfernen der Carboxyl- und der phenolischen Hydroxylgruppe ist und $R_7$ Wasserstoff ist oder eine Gruppe der Formel

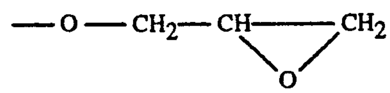

bedeutet.

Beispiele für $R_4$ als aliphatische, cycloaliphatische oder aromatische Dicarbonsäure sind weiter oben als Bildungskomponenten für Glycidylester A) aufgeführt.

$R_4$ ist vorzugsweise ein unverzweigter $C_2$-$C_{12}$Alkylenrest, ein unsubstituierter oder methylsubstituierter Phenylenrest oder ein unsubstituierter Naphthylenrest.

$R_5$ ist vorzugsweise ein Rest der Trimesinsäure oder insbesondere ein Rest der Trimellitsäure.

$R_6$ ist vorzugsweise ein unsubstituierter oder methylsubstituierter Phenylenrest oder ein unsubstituierter Naphthylenrest.

Als Komponente C2) der erfindungsgemässen Zusammensetzungen lassen sich beliebige elastomere carboxyl-, hydroxyl-, mercapto- oder glycidylether-terminierte Copolymere auf Basis von Butadien, einem polaren, ethylenisch ungesättigten Comonomeren und gegebenenfalls weiteren ethylenisch ungesättigten Comonomeren verwenden.

Beispiele für polare, ethylenisch ungesättigte Comonomere zur Herstellung von Komponente C2) sind Acrylsäure, Methacrylsäure, Ester der Acryl- oder Methacrylsäure, beispielsweise die Methyl- oder Ethylester, Amide der Acryl- oder Methacrylsäure, sowie Fumarsäure, Itaconsäure, Maleinsäure oder deren Ester und Halbester, oder Maleinsäure-oder Itaconsäureanhydrid; Vinylester, beispielswiese Vinylacetat; polare Styrole, wie kernchlorierte oder kernbromierte Styrole; oder Methacrylnitril oder insbesondere Acrylnitril.

Neben polaren, ethylenisch ungesättigten Comonomeren können zur Herstellung von Komponente C2) noch weitere unpolare, ethylenisch ungesättigte Comonomere eingesetzt werden. Beispiele dafür sind Ethylen, Propylen, oder insbesondere Styrol oder substituierte Styrole, wie Vinyltoluol.

Bei Komponente C2) kann es sich um statistische Copolymere, Block-Copolymere oder Pfropf-Copolymere handeln. Diese Komponente kann fest, insbesondere pulverförmig, oder flüssig sein, solange sich in Kombination mit Komponente C1) eine flüssige Mischung damit herstellen lässt. Komponente C2) ist im allgemeinen ein Elastomeres oder ein thermoplastisches Elastomeres. Komponente C2) ist ganz besonders bevorzugt ein flüssiges Elastomeres.

Die durchschnittlichen Molekulargewichte (Zahlenmittel) der bevorzugten flüssigen Butadien-Copolymeren betragen im allgemeinen 500-10'000, insbesondere 1'000-5'000.

Bevorzugte Komponenten C2) sind carboxyl-, hydroxyl-, mercapto- oder glycidyletherterminierte, flüssige, elastomere Copolymere auf Basis von Butadien und Acrylnitril. Beispiele für solche Verbindungen sind Kautschuke vom Typ Hycar® der Fa. B.F.Goodrich.

Carboxyl- oder carbonsäureanhydrid-terminierte Komponenten C2) lassen sich auch durch Verkappen

von hydroxyl-terminierten Butadien-Copolymeren C2) mit Polycarbonsäuren, deren Anhydriden oder anderen esterbildenden Derivaten erhalten. Beispiele für mögliche Verkappungskomponenten sind die weiter oben als Bildungskomponenten für Polyglycidylester aufgezählten Polycarbonsäuren.

Glycidyl-terminierte Komponenten C2) lassen sich auch durch Umsetzung von hydroxylterminierten Butadien-Copolymeren C2) mit Epichlorhydrin oder mit β-Methylepichlorhydrin in der weiter oben bei der Herstellung von Glycidylethern beschriebenen Weise herstellen.

Bevorzugte Typen flüssiger Butadienelastomerer C2) enthalten die Strukturelemente der Formeln VIa bis VId und die Endgruppen Q

$-CH_2-CH=CH-CH_2-$ (VIa), 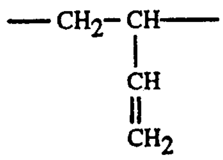 (VIb),

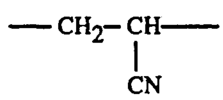 (VIc), 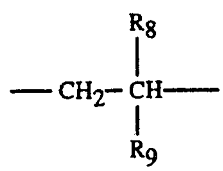 (VId),

worin $R_8$ Wasserstoff oder Methyl ist, $R_9$ $-COOH$, $-COOR_{10}$ oder $-CONH_2$ bedeutet, $R_{10}$ ein aliphatischer Rest, vorzugsweise Methyl, ist, und Q ausgewählt wird aus der Gruppe bestehend aus $-R_{11}-COOH$ und $-R_{11}-OH$, worin $R_{11}$ ein Alkylen- oder Arylenrest ist; der Anteil der Reste VIa und VIb beträgt vorzugsweise 5-50 Gew.%, der Anteil der Reste VIc beträgt vorzugsweise 5-50 Gew.% und der Anteil der Reste VId beträgt vorzugsweise 0-10 Gew.%, wobei die Mengenangaben auf die Gesamtmenge der Reste VIa bis VId bezogen sind.

Der Acrylnitrilgehalt der bevorzugten flüssigen Butadien-Copolymeren beträgt im allgemeinen weniger als 50 Gew.%, insbesondere 8 bis 30 Gew.%, bezogen auf den Gesamtmonomergehalt.

Komponente C2) kann auch in Form eines Adduktes eines Butadien-Acrylnitril Copolymeren mit den oben beschriebenen gegenüber Epoxidgruppen reaktiven funktionellen Gruppen an ein Epoxidharz eingesetzt werden.

Die Herstellung solcher Addukte erfolgt in an sich bekannter Weise durch Erhitzen des reaktiven Butadien-Elastomeren und des Epoxidharzes mit gegebenenfalls einem Katalysator, wie Triphenylphosphin, einem tertiären Amin, einem tertiären Ammonium-oder Phosphoniumsalz oder Chrom-Acetylacetonat, so dass ein schmelzbares aber noch härtbares Vorkondensat entsteht.

Der Anteil der Comonomeren zueinander in Komponente C2) kann in weiten Bereichen schwanken. Diese Komponente wird so gewählt, dass sie mit dem Epoxidharz A) und dem Härter B) verträglich ist. Dazu ist es im allgemeinen erforderlich, dass die Differenz der Löslichkeitsparameter der Mischungsbestandteile kleiner als 1,0, insbesondere kleiner als 0,6 ist. Solche Löslichkeitsparamter lassen sich beispielsweise nach Small's Methode [J.Appl.Chem., **3**, 71 (1953)] berechnen. Die Anwendung von Löslichkeitsparametern bei der Ermittlung von Verträglichkeiten von Polymergemischen wurde beispielsweise von C.B. Bucknall in "Toughened Plastics". Kapitel 2, Applied Science Publishers Ltd., London 1977, beschrieben.

Ganz besonders bevorzugte Komponenten C) sind segmentierte Copolymere mit Hydroxyl-, Carboxyl-, Carbonsäureanhydrid- oder Glycidylendgruppen enthaltend Blöcke auf Basis der Komponenten C1) und C2), die über die weiter oben definierten funktionellen Gruppen miteinander verknüpft sind.

Diese Copolymeren weisen im allgemeinen ein mittleres Molekulargewicht (Zahlenmittel) von 1'000 bis 20'000, bevorzugt von 3'000 bis 10'000, auf.

Ueber -CO-X- Gruppen miteinander verknüpfte segmentierte Copolymere C) lassen sich durch Umsetzung von carboxyl- oder carbonsäureanhydrid-terminierten Komponenten C1) mit hydroxyl-, mercapto- oder amino-terminierten Komponenten C2) oder durch Umsetzung von hydroxyl-, mercapto- oder amino-terminierten Komponenten C1) mit carboxyl- oder carbonsäureanhydrid-terminierten Komponenten C2) erhalten.

Ueber $-Y-CH_2-CH(OH)-CH_2-O-$ Gruppen miteinander verknüpfte segmentierte Copolymere C) lassen sich durch Umsetzung von carboxyl-, carbonsäureanhydrid-, hydroxyl-, mercapto- oder amino-terminierten Komponenten C1) mit glycidylether-terminierten Komponenten C2) oder durch Umsetzung von glycidylether-terminierten Komponenten C1) mit carboxyl-, carbonsäureanhydrid-, hydroxyl-, mercapto- oder amino-terminierten Komponenten C2) erhalten.

Bei diesen Umsetzungen werden die Mengen der Reaktionspartner im allgemeinen so gewählt, dass die reaktiven Gruppen einer der Komponenten im wesentlichen durch die Reaktion verbraucht werden, während die reaktiven Gruppen der anderen Komponente zum Teil erhalten bleiben und die Endgruppen der Komponente C) bilden oder durch Verkappung mit einem Verkappungsmittel in die definitionsgemässen Endgruppen übergeführt werden.

Die Umsetzungen erfolgen im allgemeinen durch Erhitzen der Bildungskomponenten der segmentierten Copolymeren in Gegenwart oder in Abwesenheit eines inerten Lösungsmittels.

Die miteinander zu reagierenden Komponenten C1) und C2) werden, je nach Funktionaliät dieser Komponenten, so ausgewählt, dass ein bei Temperaturen bis zu etwa 40 °C flüssiges segmentiertes Copolymeres erhalten wird. So wird beim Vorliegen einer difunktionellen Komponente eine weitere höher funktionelle Komponente verwendet werden können, während Kombinationen mehrerer höherfunktioneller Komponenten in der Regel zu übermässiger Vernetzung und zur Ausbildung von Gelen führen. Die Auswahlkriterien zur Herstellung der Komponente C) mit der oben angegebenen Spezifikation sind dem Fachmann auf dem Gebiet der Polymerisation an sich bekannt.

Die carboxyl-, carbonsäureanhydrid-, hydroxyl-, mercapto-, glycidylether- oder amino-terminierten Ausgangsprodukte zur Herstellung der segmentierten Copolymeren C) sind an sich bekannt oder können durch an sich bekannte Verfahren erhalten werden.

Die Herstellung von carboxyl-, carbonsäureanhydrid-, hydroxyl- oder glycidylether-terminierten Polyalkylenglykolen ist weiter oben bei der Herstellung von Komponente C1) beschrieben.

Amino-terminierte Polyalkylenglykole leiten sich beispielsweise von den oben beschriebenen hydroxylterminierten Polyalkylenglykolen ab, indem man solche Verbindungen enthaltend primäre Hydroxylgruppen, beispielsweise Polybutylenglykol, mit Acrylnitril umsetzt und die Produkte anschliessend hydriert, oder indem man solche Verbindungen enthaltend sekundäre Hydroxylgruppen mit Ammoniak umsetzt. Geeignete amino-terminierte Polypropylenglykole sind die kommerziell unter der Bezeichnung "Jeffamine®" von der Firma Texaco erhältlichen Verbindungen.

Mercapto-terminierte Polyalkylenglykole lassen sich beispielsweise durch Umsetzung der entsprechenden hydroxyl- oder amino-terminierten Polyalkylenglykole mit Mercaptocarbonsäuren oder deren Estern, wie Mercaptoessigsäure(estern), oder durch Anlagerung von Episulfiden an hydroxyl- oder amino-terminierte Polyalkylenglykole erhalten.

Die Herstellung von carboxyl-, carbonsäureanhydrid-, hydroxyl- oder glycidylether-terminierten Butadien-Copolymeren ist weiter oben bei der Herstellung von Komponente C2) beschrieben. Mercapto- und amino-terminierte Butadien-Copolymere sind teilweise im Handel erhältlich und können in Analogie zu den Polyalkylenglykolderivaten durch Verkappen von hydroxyl-terminierten Derivaten hergestellt werden.

Bevorzugte segmentierte Copolymere C) leiten sich von im wesentlichen difunktionellen Komponenten C1) und C2) ab.

Ganz besonders bevorzugte segmentierte Copolymere C) sind Verbindungen enthaltend Blöcke, die sich von flüssigen Butadien-Acrylnitril Copolymeren ableiten und enthaltend Blöcke, die sich von difunktionellen Polybutylenglykolen oder von tri- oder insbesondere von difunktionellen Polypropylenglykolen ableiten.

Ganz besonders bevorzugt verwendet man segmentierte Copolymere C) der Formel VI

$Z\{PAG\text{-}X_1\text{-}BDC\}_n\ X_1\text{-}PAG\text{-}Z$ (VI),

worin n eine ganze Zahl von 1 bis 10, insbesondere 1 ist, PAG der Rest eines difunktionellen Polypropylenglykols oder Polybutylenglykols nach dem Entfernen der funktionellen Gruppen ist, BDC der Rest eines difunktionellen flüssigen Butadien-Acrylnitril Copolymeren nach dem Entfernen der funktionellen Gruppen ist, $X_1$ eine Brückengruppe der Formeln -CO-X- bzw. -X-CO- oder $-Y-CH_2-CH(OH)-CH_2-O-$ bzw. $-O-CH_2-CH(OH)-CH_2-Y-$ ist, worin X, Y und die Endgruppen Z die oben definierte Bedeutung besitzen.

Komponenten A), B) und C) der erfindungsgemässen Zusammensetzungen sollten miteinander verträglich sein. Die Auswahl dieser Komponenten erfolgt im allgemeinen so, dass im härtbaren Gemisch keine sichtbare Phasentrennung erfolgt. Komponenten B) und C) sollten sich zumindest bei erhöhter Temperatur im Epoxidharz A) lösen. Komponenten A), B) und C) werden vorzugsweise so ausgewählt, dass bei der Härtung der Zusammensetzung ein Mehrphasensystem entsteht.

Zum Erzielen von Produkten mit hoher Festigkeit, Glasübergangstemperatur, Schälfestigkeit, Schlagzähigkeit und Rissfortpflanzungsbeständigkeit (Risszähigkeit), wird der Anteil der Komponente C), bezogen auf die Menge an A), B) und C), im allgemeinen 40 Gew.% nicht überschreiten. Die untere Grenze richtet sich nach den gewünschten Eigenschaften, beispielsweise der Schälfestigkeit. In der Regel sollte Komponente C) mehr als 5 Gew.%, bevorzugt mehr als 10 Gew.%, ausmachen. Bevorzugt werden Zusammensetzungen mit einem Anteil der Komponente C) von etwa 10 bis etwa 30 Gew.%, bezogen auf die Menge von A), B) und C).

Das Gewichtsverhältnis von C1) zu C2) bzw. das Gewichtsverhältnis der Polyalkylenglykol- und elastomeren Copolymersegmente im Copolymeren C) kann in weiten Bereichen variiert werden. Bevorzugter Bereich von C1) zu C2) bzw. der Polyalkylenglykol- zu den elastomeren Copolymersegmenten ist 50:1 bis 1:50, insbesondere 5:1 bis 1:5.

Die Menge an Härter B), bezogen auf das Epoxidharz A), ist im allgemeinen vom verwendeten Härtertyp abhängig und dem Fachmann an sich bekannt. In der Regel setzt man solche Mengen an Komponente B) ein, so dass auf eine Epoxidgruppe etwa 0,7 bis 0,8 Anhydridgruppen des Härters entfallen.

Die erfindungsgemässen Zusammensetzungen enthalten gegebenenfalls noch einen Härtungsbeschleuniger D). Art und Menge von Komponente D) hängen in der Regel vom verwendeten Härtertyp ab und sind dem Fachmann auf der Gebiet der Epoxidhärtung an sich bekannt. Einzelheiten findet man im "Epoxy-Handbook" von Lee and Neville (Mc Graw Hill, New York 1967). Bevorzugte Härtungsbeschleuniger sind tertiäre Amine, wie Benzyldimethylamin.

Die erfindungsgemässen Zusammensetzungen können durch Vermischen ihrer Komponenten in den dafür üblichen Einrichtungen hergestellt werden.

Die Härtungstemperaturen der erfindungsgemässen Zusammensetzungen liegen vorzugsweise zwischen 80 und 280 °C, besonders bevorzugt zwischen 100 und 200 °C.

Die Härtung kann gewünschtenfalls auch in zwei Stufen vorgenommen werden, indem man z.B. den Härtungsvorgang unterbricht oder die härtbare Mischung bei tieferen Temperaturen teilweise härten lässt. Die dabei erhaltenen Produkte sind noch schmelzbare und lösliche Präkondensate (sogenannte "B-Stufenharze") und eignen sich beispielsweise als Pressmassen, Sinterpulver oder zur Herstellung von Prepregs.

Gewünschtenfalls kann man den härtbaren Gemischen zur Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpolver oder Eisenpulver, ferner Pigmente und Farbstoffe, wie Russ, Oxidfarben und Titandioxid, sowie Flammschutzmittel, Thixotropiemittel, Verlaufmittel (die zum Teil auch als Formtrennmittel Anwendung finden), wie Silicone, Wachse und Stearate, oder Haftvermittler, Antioxidantien und Lichtschutzmittel enthalten.

Die erfindungsgemässen Zusammensetzungen lassen sich ganz allgemein als Giessharze zur Herstellung von gehärteten Produkten einsetzen, und können in der dem jeweils speziellen Anwendungsgebiet angepassten Formulierung, beispielsweise als Klebmittel, als Matrixharze, als Elektrogiessharze oder als Oberflächenbeschichtungsmittel verwendet werden.

Die erfindungsgemässen härtbaren Zusammensetzungen sind in der Regel bei Raumtemperatur flüssig. Sie lassen sich auf jeden Fall bei Temperaturen von 40 °C vergiessen.

Die erfindungsgemässen härtbaren Zusammensetzungen eignen sich insbesondere zum Vergiessen und Umhüllen von Elektro- und Elektronik-Komponenten, oder zur Herstellung von Verbundwerkstoffen.

Die Erfindung betrifft auch die Verwendung der härtbaren Gemische für die oben erwähnten Zwecke.

Die gehärteten Produkte zeichnen sich durch die eingangs geschilderten vorteilhaften und überraschenden Eigenschaften aus. Die Erfindung betrifft daher auch die Produkte, die durch Erhitzen der erfindungsgemässen Zusammensetzungen erhältlich sind.

Die folgenden Beispiele erläutern die Erfindung.

## I. Herstellung der Polymerkomponente C

### I.1. Präpolymer 1

Eine Mischung aus 730 g Bisphenol A-diglycidether (Epoxidgehalt 5,4 Äqu./kg), 200 g carboxylterminiertem Acrylnitril/Butadien Copolymeren (26% Acrylnitrilgehalt, Säurezahl 32 mg KOH/g), 64 g Bisphenol A und 5 g Triphenylphosphin wird 3 Stunden bei 130 °C erhitzt bis sich ein viskoses Harz mit einem Epoxidgehalt von 3,3 Äqu./kg mit einer Viskosität nach Epprecht von 130'000 mPas (40 °C) bildet.

I.2. Präpolymer 2

Eine Mischung aus 450 g Polypropylenglykoltriol mit dem Molekulargewicht $M_n$ = 4'500 (Baygal® K390 der Firma Bayer AG) und 180 g eines carboxylterminierten Butadien/Acrylnitril-Copolymers (26% Acrylnitrilgehalt, Säurezahl 32 mg KOH/g) wird 8 Stunden bei 220 °C unter leichtem Stickstoffstrom erhitzt, wobei Wasser abdestilliert. Man erhält ein Harz mit den folgenden Analysedaten:
Viskosität (nach Epprecht): 6'400 mPas (25 °C);
Molekulargewicht (GPC, in THF): $M_n$ = 7700, $M_w/M_n$ = 1,4.

I.3. Präpolymer 3

Eine Mischung aus 867 g carboxylterminiertem Butadien/Acrylnitril-Copolymer (26% Acrylnitrilgehalt, 35 mg KOH/g Säuregehalt) und 667 g dihydroxylterminiertem Polytetrahydrofuran mit dem Molekulargewicht $M_n$ = 1'000 wird 8 Stunden bei 220 °C unter leichtem Stickstoffstrom erhitzt, wobei Wasser abdestilliert. Man erhält ein Harz mit den folgenden Analysedaten:
Viskosität (nach Epprecht): 66'560 mPas (25 °C);
Hydroxylgruppengehalt: 1,65 Gew.-%;
Molekulargewicht (GPC, in THF): $M_n$ = 4750, $M_w/M_n$ = 3,7.

I.4. Präpolymer 4

Eine Mischung aus 350 g eines Polypropylenglykoldiglycidethers (Epoxidgehalt: 2,5 Äqu./kg), 936 g eines carboxylterminierten Butadien/Acrylnitril-Copolymers (26% Acrylnitrilgehalt, 35 mg KOH/g Säuregehalt) und 0,5 g Triphenylphosphin wird 7 Stunden auf 140 °C erhitzt, und man erhält ein Harz mit den folgenden Analysedaten:
Viskosität (nach Epprecht): 327'680 mPas (25 °C);
Molekulargewicht (GPC, in THF): $M_n$ = 5'390, $M_w/M_n$ = 4,9;
Epoxidgehalt: 0,34 Äqu./kg.

I.5. Präpolymer 5

Dihydroxylterminiertes Polytetrahydrofuran ($M_n$ = 1'000) wird von BASF AG bezogen.

I.6. Präpolymer 6

Polypropylenglykoltriol ($M_n$ = 4'500) wird unter dem Handelsnamen Baygal® K390 von Bayer AG bezogen.

I.7. Präpolymer 7

Das carboxylterminierte Butadien/Acrylnitril-Copolymer mit 26 % Acrylnitril und einer Säurezahl von 35 mg KOH/g wird als Hycar® CTBN 1300X13 von der Firma B.F. Goodrich bezogen.

I.8. Präpolymer 8

Eine Mischung aus 433 g Butadien/Acrylnitril-Copolymer (26 % Acrylnitril, Säurezahl 32 mg KOH/g), 500 g Diglycidylether des Polytetrahydrofurans (790 mPas bei 25 °C, Epoxidgehalt 1,2 Eq/kg, Zahlenmittel des Molekulargewichtes $M_n$ = 1'280) und 0,5 g Triphenylphosphin werden 2 Stunden auf 150 °C und 6 Stunden auf 180 °C erhitzt bis sich ein viskoses Harz mit den folgenden Analysedaten bildet:
Viskosität nach Epprecht: 76'800 mPas (25 °C);
Molekulargewicht (GPC in THF): $M_n$ = 4'950, $M_w/M_n$ = 6,3;
Epoxidgehalt: 0,39 Äqu./kg.

I.9. Präpolymer 9

Eine Mischung aus 160 g Butadien/Acrylnitril-Copolymer (26 % Acrylnitril, Säurezahl 32 mg KOH/g) und 100 g dihydroxylterminiertes Polytetrahydrofuran mit einem Molekulargewicht von 1'000 wird 8 Stunden auf 220 °C unter einem leichten Stickstoffstrom erhitzt. Man erhält ein viskoses Harz mit den folgenden Analysedaten:
Hydroxylgruppengehalt: 0,67 Äqu./kg;
Viskosität nach Epprecht: 261'120 mPas (25 °C);
Molekulargewicht (GPC in THF): $M_n$ = 5'770, $M_w/M_n$ = 6,0.

I.10. Präpolymer 10

Eine Mischung aus 100 g Butadien/Acrylnitril-Copolymer (26 % Acrylnitril, Säurezahl 32 mg KOH/g) und 125 g dihydroxylterminiertes Polytetrahydrofuran mit einem Molekulargewicht von 2'000 wird 8 Stunden unter leichtem Stickstoffstrom auf 220 °C erhitzt bis sich ein viskoses Harz mit den folgenden Analysedaten bildet:
Hydroxylgruppengehalt: 0,53 Äqu./kg;
Viskosität nach Epprecht: 87'040 mPas (40 °C);
Molekulargewicht (GPC in THF): $M_n$ = 6'470, $M_w/M_n$ = 5,7.

I.11. Präpolymer 11

Eine Mischung aus 106,7 g Butadien/Acrylnitril-Copolymer (26 % Acrylnitril, Säurezahl 32 mg KOH/g) und 133,3 g dihydroxylterminiertes Polypropylenglykol mit einem Molekulargewicht von $M_n$ = 2'000 wird 8 Stunden unter leichtem Stickstoffstrom auf 220 °C erhitzt bis sich ein viskoses Harz mit den folgenden Analysedaten bildet:
Viskosität nach Epprecht: 22'400 mPas (25 °C);
Molekulargewicht (GPC in THF): $M_n$ = 6'800, $M_w/M_n$ = 5,5.

I.12. Präpolymer 12

Eine Mischung aus 144,3 g Butadien/Acrylnitril-Copolymer (18 % Acrylnitril) und 111 g dihydroxylterminiertes Polytetrahydrofuran des Molekulargewichts 1'000 wird unter leichtem Stickstoffstrom auf 220 °C erhitzt bis sich ein viskoses Harz mit den folgenden Analysedaten bildet:
Hydroxylgruppengehalt: 0,71 Äqu./kg;
Viskosität nach Epprecht: 110'080 mPas (25 °C);
Molekulargewicht (GPC in THF): $M_n$ = 5'650, $M_w/M_n$ = 5,9.

I.13. Präpolymer 13

Eine Mischung aus carboxylterminiertem Polybutadien (kommerziell von B.F. Goodrich als Hycar® CTB 2000x162 erhältlich) und 111 g eines glycidylierten Polytetrahydrofurans (Viskosität nach Epprecht 790 mPas bei 25 °C, 1,2 Äqu. Epoxid/kg, $M_n$ = 1'280) wird in Gegenwart von 0,2 g Triphenylphosphin 8 Stunden auf 165 °C erhitzt bis ein viskoses Harz mit den folgenden Analysedaten erhalten wird:
Epoxidgehalt: 0,42 Äqu./kg;
Viskosität nach Epprecht: 29'440 mPas (25 °C);
Molekulargewicht (GPC in THF): 2'670, $M_w/M_n$ = 10,1.

II. Formulierungen und Materialprüfungen

Wie in Tabelle I beschrieben werden 4 mm-dicke Platten hergestellt, wobei man ein Bisphenol A-diglycidether (Epoxidgehalt 5,4 Äqu./kg) mit dem Anhydrid der Methyl-bicyclo[2.2.1.]hept-5-en-2,3-dicarbonsäure (Methylnadicanhydrid) in Gegenwart von katalytischen Mengen Benzyldimethylamin und verschiedenen Mengen von Präpolymeren I.1 bis I.7 härtet. Die Härtung erfolgt 6 Stunden bei 150 °C. Es werden härtbare Mischungen enthaltend als Komponente C Blockcopolymere (Beispiele II.1-II.5) oder Präpolymerblends (Beispiele II.6-II.9) geprüft.

Die folgenden Materialprüfungen werden durchgeführt:

Viskosität der ungehärteten Mischung nach der Methode Epprecht (mPas bei 25 °C);
Glasübergangstemperatur des gehärteten Produkts gemessen mittels thermomechanischer Analyse (TMA) mittels DuPont 9000 Thermoanalysegerät;
Zugscherfestigkeit auf entfettetem Aluminium gemäss DIN 53285;
Zugfestigkeit gemäss DIN 53455;
Reissdehnung gemäss DIN 53455;
Biegefestigkeit gemäss DIN 53452;
Randfaserdehnung gemäss DIN 53452;
Schlagzähigkeit (Charpy) gemäss DIN 53453;
Bruchzähigkeit $G_{Ic}$ im Bend Notch Test, wobei der Riss mittels Rasierklinge initiiert wird;
Elastizitätsmodul aus Zugversuch gemäss DIN 53455;
Elastizitätsmodul aus Biegeversuch gemäss DIN 53452;

Die Mengenangaben in der folgenden Tabelle I sind Gewichtsteile.

Tabelle I

| | Geprüfte Formulierungen | | | | | | | | |
|---|---|---|---|---|---|---|---|---|---|
| Beispiel Nr. | II.1. | II.2. | II.3. | II.4. | II.5. | II.6. | II.7. | II.8. | II.9. |
| Bisphenol A-diglycidylether (Epoxidgehalt: 5,4 Äqu./kg) | 100 | 100 | 100 | 100 | 100 | 100 | 100 | 100 | 100 |
| Methylnadicanhydrid | 81,7 | 81,7 | 81,7 | 81,7 | 81,7 | 102,3 | 81,7 | 81,7 | 102,3 |
| Benzyldimethylamin | 3,6 | 3,6 | 3,6 | 3,6 | 3,6 | 4,0 | 3,6 | 3,6 | 4,0 |
| Präpolymer 1 | | | | | | 40 | | | 40 |
| Präpolymer 2 | 24 | 48 | 80 | | | | | | |
| Präpolymer 3 | | | | 48 | | | | | |
| Präpolymer 4 | | | | | 48 | | | | |
| Präpolymer 5 | | | | | | 40 | | | |
| Präpolymer 6 | | | | | | | 40 | 40 | 40 |
| Präpolymer 7 | | | | | | | 8 | 40 | |
| Viscosität bei 25° C(mPas) | 15'360 | 12'800 | 9'280 | 26'560 | 35'840 | 22'400 | 11'520 | 23'360 | 26'880 |
| $T_g$(TMA) (° C) | 119 | 117 | 92 | 84-108 | 107 | 83 | 100 | 23 + 83 | 111 |
| Zugscherfestigkeit ($N/mm^2$) | 18,5 | 18,2 | 15,2 | 24,7 | 23,5 | 19,0 | 20,3 | 18,0 | 19,7 |
| Zugfestigkeit (N/mm) | 67,4 | 47,5 | 24,2 | 49,3 | 43,9 | 59,5 | 44,8 | 29,3 | 51,5 |
| Reissdehnung (%) | 4,3 | 7,7 | 21,1 | 9,8 | 8,2 | 7,3 | 10,9 | 45,0 | 7,7 |
| Biegefestigkeit (MPa) | 111,4 | 80,7 | 37,0 | 78,9 | 13,0 | 103,4 | 74,4 | 44,0 | 86,2 |
| Randfaserdehnung (%) | 6,6 | 12,4 | - | 12,6 | - | 12,8 | - | 12,6 | 10,6 |
| Schlagzähigkeit ($kJ/m^2$) | 28,4 | 35,3 | 40,7 | 52,8 | 36,9 | 41,7 | 41,0 | 62,8 | 28,6 |
| Bruchzähigkeit ($kJ/m^2$) | 0,91 | 1,14 | 1,09 | 1,93 | 1,78 | 0,66 | 0,55 | 0,9 | 0,82 |
| E-Modul (Zug) ($N/mm^2$) | 2444 | 1874 | 903 | 1833 | 1729 | 2407 | 1642 | 1002 | 1925 |
| E-Modul (Biegung) ($N/mm^2$) | 2427 | 1837 | 894 | 1814 | 1799 | 2420 | 1711 | 1039 | 1946 |

## Ansprüche

1. Härtbare Zusammensetzungen enthaltend

A) ein Epoxidharz mit durchschnittlich mehr als einer Epoxidgruppe pro Molekül,

B) einen Carbonsäureanhydridhärter für Komponente A), und

C) etwa 5 bis 40 Gew.%, bezogen auf die Menge der Komponenten A), B) und C), einer flüssigen Mischung aus C1) einem Polyalkylenglykol auf Basis von Polypropylenglykol oder Polybutylenglykol mit zwei bis etwa sechs Hydroxyl-, Carboxyl-, Carbonsäureanhydrid- oder Glycidylendgruppen und aus C2) einem elastomeren Copolymeren auf Basis von Butadien, einem polaren, ethylenisch ungesättigten Comonomeren und gegebenenfalls weiteren ethylenisch ungesättigten Comonomeren mit Carbonsäure-, Hydroxyl-, Mercapto- oder Glycidyletherendgruppen.

2. Härtbare Zusammensetzungen enthaltend

A) ein Epoxidharz mit durchschnittlich mehr als einer Epoxidgruppe pro Molekül,

B) einen Carbonsäureanhydridhärter für Komponente A), und

C) etwa 5 bis 40 Gew.%, bezogen auf die Menge der Komponenten A), B) und C), eines flüssigen segmentierten Copolymeren mit Hydroxyl-, Carboxyl-, Carbonsäureanhydrid-oder Glycidylendgruppen enthaltend mindestens einen Block, der sich von einem Polyalkylenglykol auf Basis von Polypropylenglykol oder Polybutylenglykol ableitet und mindestens einen Block, der sich von einem elastomeren Copolymeren auf Basis von Butadien, einem polaren, ethylenisch ungesättigten Comonomeren und gegebenenfalls weiteren ethylenisch ungesättigten Comonomeren ableitet, wobei besagte Blöcke über gleiche oder verschiedene funktionelle Gruppen -CO-X- oder $-Y-CH_2-CH(OH)-CH_2-O-$verbunden sind, worin X -O-, -S- oder $-NR_1-$ bedeutet, Y -O-, -S-, $-NR_1-$ oder -CO-O- ist und $R_1$ Wasserstoff, Alkyl, Cycloalkyl, Aryl oder Aralkyl ist.

3. Härtbare Zusammensetzungen gemäss Ansprüchen 1 oder 2, dadurch gekennzeichnet, dass Komponente A) ein cycloaliphatisches Epoxidharz oder ein Polyglycidylether ist, insbesondere ein Diglycidylether auf Bisphenol Basis.

4. Härtbare Zusammensetzung gemäss Anspruch 3, dadurch gekennzeichnet, dass Komponente A) ein flüssiger Digylcidylether auf Basis von Bisphenol A ist.

5. Härtbare Zusammensetzungen gemäss Ansprüchen 1 oder 2, dadurch gekennzeichnet, dass Komponente B) ein Anhydrid von aliphatischen, cycloaliphatischen oder aromatischen Dicarbonsäuren ist, insbesondere ein Anhydrid von Dicarbonsäuren oder ein Gemisch dieser Anhydride, das bei Temperaturen unterhalb von 40 °C flüssig ist.

6. Härtbare Zusammensetzungen gemäss Anspruch 1, dadurch gekennzeichnet, dass Komponente C1) ein drei- und insbesondere ein zweiwertiges carboxyl-, carbonsäureanhydrid-, glycidyl- und insbesondere hydroxyl-terminiertes Polypropylen- oder Polybutylenglykol mit einem durchschnittlichen Molekulargewicht (Zahlenmittel) zwischen 500 und 5'000 ist.

7. Härtbare Zusammensetzungen gemäss Anspruch 6, dadurch gekennzeichnet, dass Komponente C1) eine Verbindung der Formeln I bis V ist

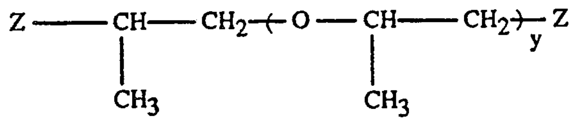

(I),

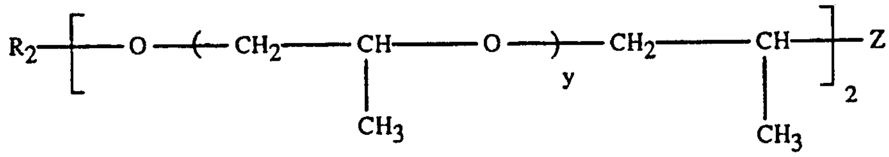

(II),

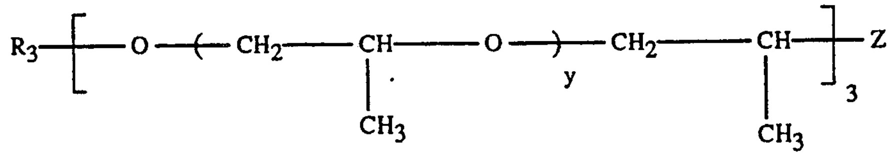

(III),

$Z-[-(CH_2)_4-O-]_z-(CH_2)_4-Z$ (IV),

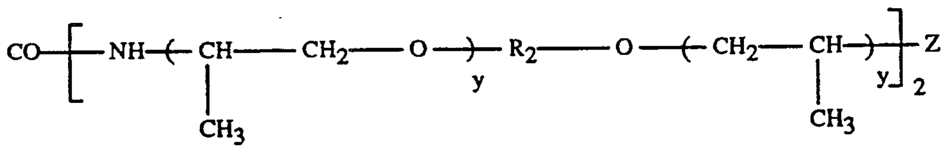

(V),

worin y 5 bis 90, insbesondere 10 bis 90, bedeutet, z 10 bis 40 ist, $R_2$ ein Rest eines aliphatischen Diols oder eines Bisphenols nach dem Entfernen der beiden OH-Gruppen ist, $R_3$ einen Rest eines aliphatischen Triols oder eines Trisphenols nach dem Entfernen der drei OH-Gruppen bedeutet und Z ein Rest ist, der ausgewählt wird aus der Gruppe

bestehend aus 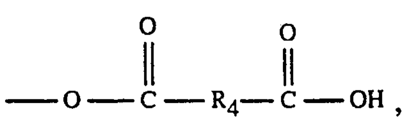 , 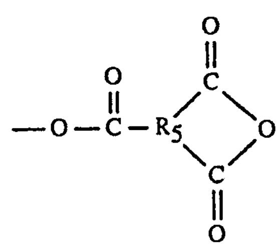 ,

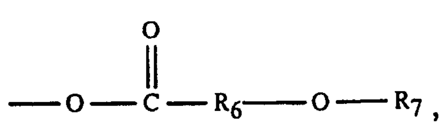 , 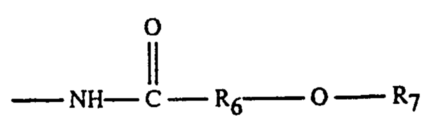 ,

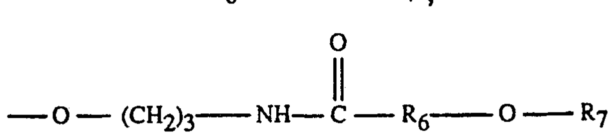 und $-O-R_7$, worin $R_4$ der Rest einer aliphatischen, cycloaliphatischen oder aromatischen Dicarbonsäure nach dem Entfernen der beiden Carboxylgruppen ist, $R_5$ der Rest einer aromatischen Tricarbonsäure nach dem Entfernen der drei Carboxylgruppen ist, $R_6$ der Rest einer aromatischen Hydroxycarbonsäure nach dem Entfernen der Carboxyl- und der phenolischen Hydroxylgruppe ist und $R_7$ Wasserstoff ist oder eine Gruppe der Formel

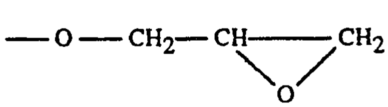

bedeutet.

8. Härtbare Zusammensetzungen gemäss Anspruch 1, dadurch gekennzeichnet, dass Komponente C2) ein carboxyl-, hydroxyl-, mercapto- oder glycidylether-terminiertes, flüssiges, elastomeres Copolymeres auf Basis von Butadien und Acrylnitril ist oder ein Addukt dieses Copolymeren an ein Epoxidharz ist.

9. Härtbare Zusammensetzungen gemäss Anspruch 2, dadurch gekennzeichnet, dass Komponente C) Blöcke enthält, die sich von flüssigen Butadien-Acrylnitril Copolymeren und von difunktionellen Polybutylenglykolen oder von tri- oder insbesondere von difunktionellen Polypropylenglykolen ableiten.

10. Härtbare Zusammensetzungen gemäss Anspruch 9 dadurch gekennzeichnet, dass Komponente C) ein segmentiertes Copolymeres der Formel VI ist

$Z\{PAG\text{-}X_1\text{-}BDC\}_n\ X_1\text{-}PAG\text{-}Z$ (VI),

worin n eine ganze Zahl von 1 bis 10 ist, PAG der Rest eines difunktionellen Polypropylenglykols oder Polybutylenglykols nach dem Entfernen der funktionellen Gruppen ist, BDC der Rest eines difunktionellen flüssigen Butadien-Acrylnitril Copolymeren nach dem Entfernen der funktionellen Gruppen ist, $X_1$ eine Brückengruppe der Formeln -CO-X- bzw. -X-CO- oder $-Y-CH_2-CH(OH)-CH_2-O-$ bzw. $-O-CH_2-CH(OH)-CH_2-Y-$ ist, worin X und Y eine der in Anspruch 2 definierten Bedeutungen besitzen und die Endgruppen Z eine der in Anspruch 7 definierten Bedeutungen besitzen.

11. Verwendung der härtbaren Zusammensetzungen gemäss Anspruch 1 oder 2 zum Vergiessen und Umhüllen von Elektro- und Elektronik-Komponenten oder zur Herstellung von Verbundwerkstoffen.

12. Gehärtete Produkte erhältlich durch Erhitzen der härbaren Zusammensetzungen gemäss Anspruch 1 oder 2.

Europäisches Patentamt

# EUROPÄISCHER RECHERCHENBERICHT

Nummer der Anmeldung

EP 90 81 0111

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 280 077 (L.C. CASE et al.)<br>* Ansprüche *<br>--- | 1,2 | C 08 L 63/00 |
| A,D | DE-A-2 447 036 (PHOENIX GUMMIWERKE AG)<br>* Ansprüche; Seite 11, letzter Absatz *<br>--- | 1,2 | |
| A,D | DE-A-3 740 183 (SUNSTAR GIKEN K.K.)<br>* Ansprüche; Seite 3, Zeilen 27,50 *<br>----- | 1,2 | |
| | | | RECHERCHIERTE SACHGEBIETE (Int. Cl.5) |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 24-04-1990 | PRAS J-L.C.N. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument